# EUROPEAN PATENT APPLICATION

(11) **EP 4 729 394 A1**
(43) Date of publication of application: **22.04.2026**
(21) Application number: 25205980.3
(22) Date of filing: 01.10.2025
(51) Int. Cl.: B62D 6/10, B62D 5/04, B62D 5/093

(54) **STEERING APPARATUS WITH INNOVATIVE SENSOR SYSTEM AND RELATIVE CONTROL METHOD**

(30) Priority: 17.10.2024 IT 202400023094
(71) Applicant: OGNIBENE POWER S.P.A., 42124 Reggio Emilia (IT)
(72) Inventor: OGNIBENE, Claudio, 42121 Reggio Emilia (IT)
(74) Representative: Corradini, Cesare

(57) **Abstract**

A steering apparatus (100) is described which is provided with: a drive shaft (105) rotatably coupled to a support structure (190) and comprising at least a first segment (175), a second segment (180), and a torsion bar (185) which is placed to connect the first segment (175) to the second segment (180) allowing them relative angular offsets; a device (110) adapted to transform a rotation of the drive shaft (105) into a displacement of at least one steering member (115) of a vehicle; an electric motor (200) adapted to apply torsional torques to the drive shaft (105); two angular position sensors, of which a first angular position sensor (220) adapted to detect the angular position of the first segment (175) of the drive shaft (105) with respect to the support structure (190), and a second angular position sensor (265) adapted to detect the angular position of the second segment (180) of the drive shaft (105) with respect to the support structure (190); and an electronic control and command unit (215) configured to control the operation of the electric motor (200) based on the readings made by said first and second angular position sensors (220, 265).

## Description

### Technical field

The present invention concerns a steering apparatus for vehicles, in particular but not necessarily for agricultural vehicles and/or heavy-duty vehicles, such as for example tractors or earthmoving machines.

More in particular, the invention concerns an electro-assisted steering apparatus provided with an innovative sensor system.

### State of the art

As is known, a steering apparatus generally comprises a drive shaft, e.g. connected to the steering wheel of the vehicle, and a device (mechanical, hydraulic or any other type), which is adapted to convert a rotation imparted to said drive shaft into a corresponding displacement of at least one steering member of the vehicle, e.g. a pair of steering wheels.

In the case of electro-assisted steering, the steering apparatus normally also comprises an electric motor, which is mechanically connected to the drive shaft, so that it is able to apply torsional torques to the latter, which rotate it and/or contribute to its rotation, assisting or counteracting (as required) the torsional forces applied manually by the driver. The operation of the electric motor is usually controlled by an electronic control and command unit, based on measurement signals from at least two sensors.

One of these sensors is a sensor adapted to measure the angular position of the rotor of the electric motor with respect to the corresponding stator, which measurement can advantageously be used by the electronic control and command unit, for example, to establish the correct switching times of the electrical voltage on the stator windings.

The second sensor is instead adapted to measure the torque that the driver transmits to the drive shaft, which can be used by the electronic control and command unit, for example, to establish the modulus (intensity) and/or direction of the auxiliary torsional torque to be generated by the electric motor.

More precisely, this second sensor is generally adapted to measure the angular offset that the torsional torque applied by the driver causes between two contiguous segments of the drive shaft, which are mutually connected by a torsion bar.

Thereby, knowing the angular offset and torsional spring characteristic of the torsion bar, it is in fact advantageously possible to calculate the torsional torque applied by the driver. To measure the offset, the second sensor generally comprises two elements, one of which is a sensitive element and a reference element adapted to interact with the sensitive element, each of which is associated with a respective segment of the drive shaft.

A drawback of this solution is that the second sensor is relatively bulky and expensive, complicating the overall structure of the steering apparatus.

### Disclosure of the invention

An aim of the present invention is to solve or at least limit the mentioned drawbacks of the prior art, within the context of a simple and rational solution and at a relatively reduced cost.

Such and other objects are achieved thanks to the characteristics of the invention reported in independent claim 1. The dependent claims outline preferred and/or particularly advantageous aspects of the invention but not strictly necessary for implementing it.

In particular, an embodiment of the present invention makes available a steering apparatus provided with:
- a drive shaft rotatably coupled to a support structure and comprising at least a first segment, a second segment, and a torsion bar which is placed to connect the first segment to the second segment allowing them relative angular offsets,
- a device adapted to transform a rotation of the drive shaft into a displacement of at least one steering member of a vehicle, said device comprising at least one hydraulic steering actuator and a hydrostatic steering unit comprising a rotary distributor and a rotary dosing device
- an electric motor adapted to apply torsional torques to the drive shaft,
- two angular position sensors (e.g., rotary encoders), of which a first angular position sensor adapted to detect the angular position of the first segment of the drive shaft with respect to the support structure, and a second angular position sensor adapted to detect the angular position of the second segment of the drive shaft with respect to the support structure, and
- an electronic control and command unit configured to use the detections made by said first and second angular position sensor, so as to determine an angular offset between the first segment and the second segment of the drive shaft, to use said angular offset so as to calculate the torsional torque applied to the drive shaft, and to control the operation of the electric motor based on the calculated torsional torque.

Thanks to this solution, as the first and second angular position sensors are used to calculate the torsional torque applied to the drive shaft, they make the use of a torque sensor completely superfluous, which can therefore be omitted, simplifying the steering apparatus.

Of course, the first and the second angular position sensor can then also be used for other purposes.

For example, the first angular position sensor can be advantageously used in essentially the traditional manner, to establish the angular position of the electric motor rotor with respect to the stator.

The second angular position sensor can instead advantageously be used to allow the electronic control and command unit to know the actual position, moment by moment, of a manual steering member (e.g., a steering wheel) that can be connected to the drive shaft, e.g., to perform procedures that automatically return it to a predetermined position (*autocentering*)*.*

The second angular position sensor can also have a redundancy function with respect to the first angular position sensor, increasing the safety of the steering apparatus.

In addition to this, the use of two angular position sensors, instead of one angular position sensor and one torque sensor, generally implies a smaller footprint and therefore the possibility of simplifying and reducing the size of the steering apparatus.

According to an aspect of the invention, the first angular position sensor and the second angular position sensor can both be inductive type sensors.

This type of sensor has the advantage of being particularly efficient and reliable, in addition to the fact that it can be advantageously made rather small.

Another aspect of the invention envisages that the first angular position sensor can be individually configured to generate two independent signals, both of which are indicative of the angular position of the first segment of the drive shaft with respect to the support structure.

By generating these two substantially redundant signals, it is advantageously possible to increase the reliability of the first angular position sensor and the safety of the steering apparatus.

According to a further aspect of the invention, the first angular position sensor can comprise:
- a rotor part coupled to the first segment of the drive shaft so as to be integral therewith at least in rotation, and
- a stator part fixed to the support structure,
wherein the rotor part comprises one or more lobes protruding radially with respect to the first segment of the drive shaft, and wherein the stator part comprises at least one element sensitive to the angular position of said lobes, for example one or more windings extending sinusoidally around the rotation axis of the first segment.

This solution has the advantage of allowing the creation of a very simple and compact angular position sensor, while ensuring high efficiency and reliability.

An aspect of the invention envisages that the number of lobes of the rotor part of the first angular position sensor can be equal to or less than the total number of pole pairs of the electric motor.

Thereby, the resolution of the first angular position sensor can be advantageously rather high.

According to another aspect of the invention, the first angular position sensor can comprise a second element that is sensitive to the angular position of said lobes.

This aspect of the invention provides a particularly simple solution for the first angular position sensor to be able to generate the two redundant signals outlined above.

A further aspect of the invention envisages that the stator part of the first angular position sensor can comprise an electronic board (e.g., PCB) and that each sensitive element of the first angular position sensor can be associated with said electronic board.

This solution makes it advantageously possible to make a particularly compact angular position sensor.

Similarly to what has been disclosed for the first angular position sensor, another aspect of the invention envisages that the second angular position sensor can be individually configured to generate two independent signals, both of which are indicative of the angular position of the second segment of the drive shaft with respect to the support structure. By generating these two essentially redundant signals, it is advantageously possible to increase the reliability of the second angular position sensor and the safety of the steering apparatus.

According to a further aspect of the invention, the second angular position sensor can comprise:
- a rotor part coupled to the second segment of the drive shaft so as to be integral therewith at least in rotation, and
- a stator part fixed to the support structure,
wherein the rotor part comprises one or more lobes protruding radially with respect to the second segment of the drive shaft, and wherein the stator part comprises at least one element sensitive to the angular position of said lobes, for example one or more windings extending sinusoidally around the rotation axis of the second segment.

This solution has the advantage of allowing the creation of a very simple and compact angular position sensor, while ensuring high efficiency and reliability.

An aspect of the invention envisages that the number of lobes of the rotor part of the second angular position sensor can be at least equal to or, more preferably, greater than, e.g., multiple, the number of lobes of the rotor part of the first angular position sensor. This solution has the advantage of providing the second angular position sensor with a rather high resolution and, at the same time, making it easier and more reliable to determine the angular offset between the first segment and the second segment of the drive shaft.

According to another aspect of the invention, the second angular position sensor can comprise a second element that is sensitive to the angular position of said lobes.

This aspect of the invention provides a particularly simple solution for the second angular position sensor to be able to generate the two redundant signals outlined above.

A further aspect of the invention envisages that the stator part of the second angular position sensor can comprise an electronic board (e.g., PCB) and that each sensitive element of the second angular position sensor can be associated with said electronic board.

This solution makes it advantageously possible to make a particularly compact angular position sensor.

In particular, in order to further reduce the overall dimensions of the sensor system, a possible embodiment of the present invention envisages that each sensitive element of the second angular position sensor can be associated with the same electronic board to which each sensitive element of the first position sensor is associated.

Another embodiment of the present invention then makes available a method for controlling a steering apparatus of the type outlined above, i.e., comprising:
- a drive shaft rotatably coupled to a support structure and comprising at least a first segment, a second segment, and a torsion bar which is placed to connect the first segment to the second segment allowing them relative angular offsets,
- a device adapted to transform a rotation of the drive shaft into a displacement of at least one steering member of a vehicle, said device comprising at least one hydraulic steering actuator and a hydrostatic steering unit comprising a rotary distributor and a rotary dosing device,
- an electric motor adapted to apply torsional torques to the drive shaft, and
- two angular position sensors, of which a first angular position sensor adapted to detect the angular position of the first segment of the drive shaft with respect to the support structure, and a second angular position sensor adapted to detect the angular position of the second segment of the drive shaft with respect to the support structure.

The control method of this steering apparatus comprises the steps of:
- detecting, by means of the first angular position sensor, the angular position of the first segment of the drive shaft with respect to the support structure,
- detecting, by means of the second angular position sensor, the angular position of the second segment of the drive shaft with respect to the support structure,
- calculating the angular offset between the first segment and the second segment based on the detections of the two angular position sensors,
- determining, based on the calculated angular offset, a torsional torque applied to the drive shaft, and
- controlling the operation of the electric motor based on the calculated torsional torque.

This control method, which can be performed by a suitably configured (programmed) electronic control and command unit, achieves essentially the same advantages as mentioned above, in particular that of allowing complete control of the electric motor without the need for a torque sensor.

Of course, all the ancillary aspects already described with reference to the steering apparatus are also applicable, *mutatis mutandis,* to the corresponding control method.

### Brief description of the drawings

Further features and advantages of the invention will be more apparent after reading the following description provided by way of a non-limiting example, with the aid of the accompanying drawings.
Figure 1 is a diagram of a steering apparatus according to an embodiment of the present invention.
Figure 2 is a perspective view of a first angular position sensor of the steering apparatus of Figure 1.
Figure 3 is a perspective view of a second angular position sensor of the steering apparatus of Figure 1.
Figure 4 is a variant of the diagram of Figure 1.
Figure 5 is a perspective view of the first and second angular position sensors in an integrated version.

### Detailed description

The above figures relate to a steering apparatus 100 for self-propelled vehicles, in particular but not exclusively for agricultural and/or heavy vehicles adapted to move at low speeds (typically below 60 km/h), such as agricultural tractors or earthmoving machines. The steering apparatus 100 generally comprises a drive shaft (or steering shaft) 105 and a device 110 adapted to transform a rotation of said drive shaft 105 into a displacement of one or more steering members 115 of the vehicle.

In the example illustrated, each steering member 115 is a steering wheel and the device 110 is adapted to transform a rotation of the drive shaft 105 into a corresponding rotation of each steering wheel around a respective steering axis, varying the orientation thereof. The device 110 can be of any type, e.g., mechanical (e.g., pinion-rack), hydraulic or mixed.

According to a preferred embodiment, the device 110 can, however, comprise at least one hydraulic steering actuator 120, which is adapted to be connected to the steering members 115 of the vehicle, e.g., the steering wheels, so as to cause the steering thereof. In the illustrated example, the hydraulic steering actuator 120 is a double-acting jack, which is provided with a cylinder 125 and with a relative plunger 130 which subdivides the inner volume of the cylinder 125 into two separate operating chambers 135 and 140.

The plunger 130 of the hydraulic jack can comprise two opposite stems, which are arranged parallel to the axis of the cylinder 125, preferably coaxial with the latter.

Each of these stems protrudes outside the cylinder 125 and can be mechanically connected to a respective steering member 115, e.g., to a respective steering wheel, preferably by means of suitable levers, so as to transform the axial movement of each stem into a corresponding movement of the respective steering member 115, e.g., into a rotation of the respective steering wheel around the steering axis thereof.

Thereby, each movement of the plunger 130, in one direction or in the opposite direction, corresponds to a change in the position of both steering wheels 115, e.g., a change in the steering angle of both steering wheels.

Although a solution with a single hydraulic steering actuator 120 has been illustrated, the device 110 could comprise a plurality of hydraulic steering actuators 120, for example a plurality of double-acting jacks, each of which could be adapted to drive a respective steering member 115 of the vehicle, for example a respective steering wheel.

In other embodiments, each double-acting jack could be replaced by any other hydraulic motor, including those of the rotary type, that can be connected with the steering members 115 of the vehicle to cause them to steer in both directions.

The device 110 can further comprise a pump 145, e.g., a positive displacement pump driven by the motor of the vehicle, which is adapted to withdraw an operating fluid, typically an incompressible fluid (e.g., oil), from a tank 150 and send it pressurised to a hydrostatic steering unit 155, which is also commonly referred to as "power steering".

The hydrostatic steering unit 155 is connected to the drive shaft 105 and is adapted to supply operator fluid to each hydraulic steering motor or actuator 120, so as to cause the driving thereof in response to the rotation of the drive shaft 105.

The hydrostatic steering unit 155 can comprise an outer casing 160, which can be provided with an inlet port in hydraulic communication with the delivery of the pump 145, a discharge port in hydraulic communication with the tank 150, a first connection port in hydraulic communication with the hydraulic steering actuator 120, for example with the first chamber 135 of the cylinder 125, and a second connection port also in hydraulic communication with the hydraulic steering actuator 120, but for example with the second chamber 140 of the cylinder 125.

The hydrostatic steering unit 155 can further comprise a hydraulic distributor 165 and a dosing device 170, both of which can be housed in the outer casing 160.

The hydraulic distributor 165 and the dosing device 170 (known per se) can both be of the rotary type and, in any case, can both be driven by the drive shaft 105.

The hydraulic distributor 165 can comprise, for example, a rotary unit, rotatably accommodated in the outer casing 160, which is provided with two cylinders coaxially inserted into each other.

A first of these cylinders (the inner one) is adapted to be connected with the drive shaft 105, so that it can rotate on itself around the central axis thereof, driven in rotation by the drive shaft 105 itself.

The second of these cylinders (the outer one) is rotatably fitted on the first cylinder, to which it is constrained so as to allow relative rotations around the common axis for a limited angle in both directions and, subsequently (after covering said angle), so that the two cylinders can rotate together with respect to the outer casing 160.

Suitable spring means can be provided to normally hold the second cylinder in a predetermined angular (neutral) position with respect to the first cylinder, preferably in a position that is central with respect to the permitted angle of mutual rotation.

Turning to the dosing device 170, it can be shaped like a kind of gear-driven positive displacement pump, e.g., like the one commonly called "gerotor".

In particular, the dosing device 170 can comprise an annular stator with lobes and a rotor with lobes, placed inside the stator and meshing therewith, which is slightly offset with respect to the stator and is adapted to be connected to the drive shaft 105, so that it can be dragged into rotation by the latter.

In the operation of the hydrostatic steering unit 155, as long as the drive shaft 105 is stationary, the second (outer) cylinder of the distributor 165 is in the aforementioned neutral position with respect to the first (inner) cylinder.

In this neutral position, the pressurised operator fluid is not supplied to the hydraulic steering actuator 120, in the example not to the first nor to the second operating chamber 135 and 140, which remains inactive.

When the drive shaft 105 is rotated in either direction, the first cylinder of the distributor 165 initially makes a small rotation with respect to the second cylinder and moves to an initial operating position in which pressurised fluid (e.g., oil) is sent to the hydraulic steering actuator 120, to cause the movement of each steering member 115, e.g., the steering of each steering wheel, in a first direction.

For example, when the first cylinder is in the first operating position, the first chamber 135 of the cylinder 125 can be in connection with the tank 150, while the second chamber 140 can be in connection with the delivery of the pump 145 through the dosing device 170.

Thereby, continuing to rotate the drive shaft 105 in the same direction, the dosing device 170 transfers a quantity of pressurised fluid to the second chamber 140 that is proportional to the rotation performed.

When the drive shaft 105 is stopped, the second (outer) cylinder of the distributor 165 returns to the neutral position, for example by means of the aforementioned spring means, so as to stop the delivery of pressurised fluid to the hydraulic steering actuator 120, and thus stop the movement of the steering members 115, for example of the steering wheels, in the configuration achieved.

By reversing the direction of rotation of the drive shaft 105, the operation of the hydrostatic steering unit 155 is the same, the only difference being that the first (inner) cylinder of the distributor 165 moves to a second operating position with respect to the second (outer) cylinder, wherein pressurised operating fluid is still sent to the hydraulic steering actuator 120, but to cause the movement of each steering member 115, e.g., the steering of each steering wheel, in the opposite direction to the previous one.

For example, when the first cylinder is in the second operating position, the second chamber 140 of the cylinder 125 can be connected to the tank 150, while the first chamber 135 can be connected to the delivery of the pump 145 through the dosing device 170. Returning to the drive shaft 105, it can comprise (or be formed by) at least two segments, a first segment 175 and a second segment 180.

It is desired here to specify that "segment" is intended as an axial portion of the drive shaft 105, i.e., a portion obtainable by ideally secanting the drive shaft 105 by means of two section planes orthogonal to the axis thereof and spaced apart from each other.

The first segment 175 can be interposed between the second segment 180 and the device 110, i.e. it can be the one defining the end of the drive shaft 105 that is connected with the device 110, in this case with the hydrostatic steering unit 155.

The drive shaft 105 can further comprise a torsion bar 185 to connect the first segment 175 to the second segment 180, so as to allow them at least small relative angular offsets. In practice, each segment of the drive shaft 105 can be considered in turn a shaft, coaxial with the shaft defining the other segment, and joined to the latter by means of the torsion bar 185, so that the first and the second segment 175 and 180 are mutually integral in rotation, net of the aforesaid angular offsets.

In this regard, it is desired to specify that "small" angular offsets means offsets which, for the normal torques applied to the drive shaft 105 in the operation of the steering apparatus 100, are nevertheless perceptible and measurable, e.g., greater than or equal to 0.1° sexagesimal.

At the same time, it is preferable that such offsets, again for the normal torques that are applied to the drive shaft 105 in the operation of the steering apparatus 100, are not excessive, e.g., less than or equal to 10° sexagesimal.

To allow the angular offsets, the torsion bar 185 can be torsionally more yielding with respect to the first and the second segment 175 and 180 of the drive shaft 105, e.g., it can have a cross-section with a lower torsional moment of inertia with respect to the cross-sections of the first and the second segment 175 and 180.

In particular, the torsion bar 185 can be shaped as an elongated body, or as a further shaft, which can be arranged coaxially to the first and the second segment 175 and 180, and can have a first axial end fixed (or at least integral in rotation) to the first segment 175 and a second and opposite axial end fixed (or at least integral in rotation) to the second segment 180.

In some embodiments, the first and the second segment 175 and 180 could be axially inserted into each other at least partially, for example by means of a shape coupling that leaves them free to mutually rotate, and the torsion bar 185 could be accommodated and enclosed inside a cavity obtained, in part, in the first segment 175 and, in part, in the second segment 180.

The drive shaft 105 can be associated with a support structure 190, to which it can be rotatably coupled, e.g., by the interposition of one or more bearings, and from which it can also possibly be axially supported.

This support structure 190 can be shaped like a casing, preferably closed, containing, at least partially, the first and the second segment 175 and 180.

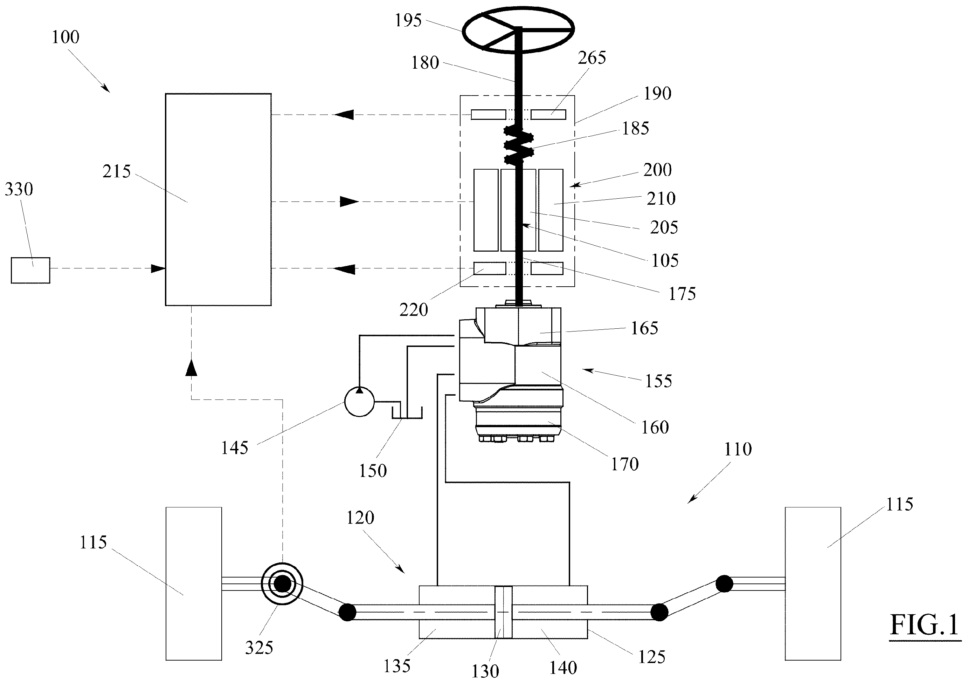

In order to rotate the drive shaft 105, the steering apparatus 100 can comprise a manual member 195 (see Fig. 1), for example a steering wheel, which can be manually operated by a driver of the vehicle.

This manual member 195 can be connected to the drive shaft 105, preferably to the second segment 180, either directly or through a suitable transmission system, for example one or more further shafts, possibly articulated, adapted to transmit a torsional moment between the manual member 195 (e.g., the steering wheel) and the drive shaft 105.

As an alternative or in addition to the manual member 195, an electric motor 200, preferably a permanent-magnet electric motor, e.g. a brushless motor, can be associated with the drive shaft 105, adapted to apply torsional torques thereto.

In particular, this electric motor 200 can be adapted to apply torsional torques to the drive shaft 105 through the first segment 175.

In other words, the torsional torques generated by the electric motor 200 can discharge earlier on the first segment 175 than on any other segment or portion of the drive shaft 105.

The electric motor 200 can be associated with the support structure 190 to which the drive shaft 105 is also associated, e.g., enclosed within the casing that defines it.

More in particular, the electric motor 200 can comprise a rotor 205 and a stator 210. The rotor 205 can have an annular shape and can be coaxially fitted and rotatably constrained to the drive shaft 105, for example to the first segment 175.

The stator 210 can also have an annular shape and can coaxially surround the rotor 205. The stator 210 can be fixed to the support structure 190, for example inside the casing that defines it.

Permanent magnets or electrical rotor windings can be directly applied to the rotor 205, while electrical stator windings can be directly applied to the stator 210.

In general, the stator windings can be connected to an electrical power source, e.g., a vehicle battery and/or alternator, by means of suitable electrical connections.

The steering apparatus 100 can further comprise an electronic control and command unit 215, e.g., microprocessor-based, which can be configured to control the supply current and/or voltage of the electric motor 200, or applied to the stator windings, in order to regulate the operation and torque generated by the same.

The electronic control and command unit 215 can act by varying the electrical supply parameters, such as current intensity, voltage and/or switching frequency.

To allow the electronic control and command unit 215 to perform its function, the steering apparatus 100 can comprise a first angular position sensor (or transducer) 220 (e.g. rotary encoder), preferably of an inductive type, which is adapted to detect the angular position of the first segment 175 of the drive shaft 105 (and thus of the stator 210 of the electric motor 200) with respect to the support structure 190.

In particular, the first angular position sensor 220 can be adapted to generate an electrical signal indicative of the angular position instantaneously assumed by the first segment 175 of the drive shaft 105, with respect to the support structure 190.

This first angular position sensor 220 can be used by the electronic control and command unit 215 to establish the switching times of the electrical voltage on the windings of the stator 210.

In fact, the proper operation of an alternating current electric motor 200, e.g., a threephase synchronous electric motor with permanent magnets, generally requires that the frequency of the phase currents be synchronous with the rotation of the rotor 205 and that the magnetic field generated by the windings of the stator 210 always be oriented in a manner corresponding to the angular position of the rotor 205.

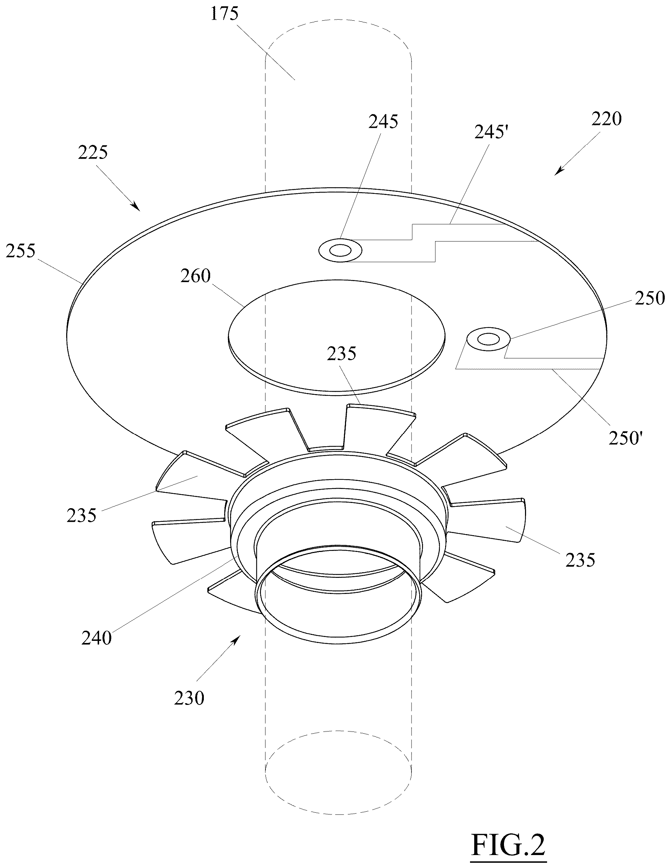

Entering into more detailed aspects (see Fig. 2), the first angular position sensor 220 can comprise a stator part 225 and a rotor part 230, both of which can be contained within the casing that can define the support structure 190.

In any case, the stator part 225 can be stably fixed to the support structure 190 while the rotor part 230 can be coupled to the first segment 175 of the drive shaft 105, so as to be integral therewith at least in rotation.

In particular, the rotor part 230 can comprise one or more lobes 235, preferably a plurality of lobes 235, which protrude radially with respect to the first segment 175 of the drive shaft 105, so as to be lateral with respect to its rotation axis.

These lobes 235 can be made as a single body or otherwise fixed to an annular body 240, preferably made of metallic material, which is fitted and rotatably constrained (e.g., keyed) to the first segment 175 of the drive shaft 105.

The lobes 235, which can also be made of metallic material, are preferably identical to each other.

They can be radially distributed around the first segment 175 of the drive shaft 105, e.g., substantially coplanar in a plane orthogonal to the rotation axis and angularly equidistant. In particular, each of these lobes 235 can be shaped as a relatively thin flap having the shape of a circular sector (or more appropriately a disc sector) centred on the rotation axis of the first segment 175 of the drive shaft 105 and lying in a plane perpendicular thereto.

The slats defining the lobes 235 can all have the same angular extension, which can be equal to the angular extension of each of the gaps separating them.

The number of lobes 235 can be equal to or less than the number of pole pairs of the electric motor 200.

For example, the number of lobes 235 can be as high as possible but no higher than the number of pole pairs of the electric motor 200.

Ideally, the number of lobes 235 should be exactly equal to the number of pole pairs of the electric motor 200.

Therefore, in the illustrative and non-limiting case of a motor with seven pole pairs, the number of lobes 235 can be seven or less and, more preferably, exactly seven.

The stator part 225 of the first angular position sensor 220 can comprise at least one sensitive element 245, which is sensitive to the angular position of the lobes 235, i.e., is sensitive to (e.g., manifests a different behaviour or property based on) the angular position that the lobes 235 assume with respect to the sensitive element 245 itself.

The stator part 225 of the first angular position sensor 220 can further comprise an electrical/electronic circuit 245' which, for example by exploiting the aforesaid sensitivity, is adapted to detect the angular position of the lobes 235 with respect to said sensitive element 245.

In particular, the electrical/electronic circuit 245' can be configured to generate and transmit to the electronic control and command unit 215 an electrical signal, at least one characteristic parameter of which (e.g., the voltage level) is influenced by the angular position of the lobes 235 with respect to said sensitive element 245, thereby also being representative of the angular position of the first segment 175 of the drive shaft 105.

For example, the sensitive element 245, which is depicted schematically as a circle in the figures, can actually comprise at least three concentric windings of conductive material, one outer winding and two inner windings.

Each of the two inner windings extends sinusoidally around the rotation axis of the first segment 175 of the drive shaft 105, so that it faces the lobes 235, for example, for approximately 50% of its angular extension.

In particular, these two inner windings are angularly offset from each other by 90° sexagesimal (sin-cos).

The outer winding also extends around the rotation axis of the first segment 175 surrounding the two inner windings.

The outer winding is an excitation winding in which a sinusoidal current is generated, which induces in the remaining inner windings a current that depends on the angular position of the lobes 235, by virtue of the physical principle of Eddy currents.

Such current then generates a sinusoidal voltage the amplitude of which depends on the angular position of the lobes 235 and which, through an amplitude demodulation, makes it possible to obtain two signals (sin-cos) from which the absolute angle can be derived (through an arctg operation).

In other embodiments, instead of being of the inductive type as outlined above, the angular position sensor 220 could be capacitive, magnetic or any other type.

Irrespective of the technology used, in order to increase the reliability of the first angular position sensor 220, the stator part 225 can also comprise a second sensitive element 250, distinct from the previous one but analogous and adapted to interact with the same lobes 235 of the rotor part 230, and possibly a respective second electrical/electronic circuit 250', so as to generate and transmit to the electronic control and command unit 215 a second analogous electrical signal representative of the angular position of the first segment 175 of the drive shaft 105.

This second electrical signal is substantially redundant with respect to the first and can be useful to ensure that the steering apparatus 100 continues to operate safely, even in the event of a failure of the first sensitive element 245.

It is not excluded, however, that the angular position sensor 220 can comprise only one sensitive element, e.g., the sensitive element 245, or a number of sensitive elements greater than two.

Each sensitive element 245 and/or 250, and possibly the corresponding electrical/electronic circuit, can be associated with or integrated into an electronic board 255 (e.g., PCB).

This electronic board 255, which can be generally flat in shape, can be oriented perpendicular to the rotation axis of the first segment 175 of the drive shaft 105 and can be provided with a through hole 260 into which the first segment 175 can freely fit.

The electronic board 255 can be fixed, e.g., screwed, to the support structure 190 of the drive shaft 105, e.g., by staying inside the housing that defines it.

In particular, the electronic board 255 can be positioned so that one of its major surfaces faces the lobes 235 of the rotor part 230.

For this purpose, the maximum diameter of the lobes 235 is preferably larger than the diameter of the through hole 260 and the maximum diameter of the electronic board 250 smaller.

Furthermore, it is preferable that the electronic board 255 is positioned a short distance from the lobes 235 of the rotor part 230 (generally much shorter than depicted in Figure 2) and, regardless of this, that it is separated from said lobes 235 by an empty gap, i.e., so that there is nothing in between.

Each of the sensitive elements 245 and/or 250 can be applied (e.g., printed, etched, cut or mounted) to the surface of the electronic board 255 which the lobes 235 face.

For example, if each of the sensitive elements 245 and/or 250 comprises the aforementioned windings, each of them could be made in the form of a track (or line) of conductive material etched on the surface of the electronic board 255.

The steering apparatus 100 can further comprise a second angular position sensor (or transducer) 265 (e.g., rotary encoder), preferably of an inductive type, which is adapted to detect the angular position of the second segment 180 of the drive shaft 105 with respect to the support structure 190.

In particular, the second angular position sensor 265 can be adapted to generate an electrical signal indicative of the angular position instantaneously assumed by the second segment 180 of the drive shaft 105, with respect to the support structure 190.

This second angular position sensor 265 can be used by the electronic control and command unit 215, in association with the angular position signal generated by the first angular position sensor 220, to detect (calculate) the angular offset between the first and the second segment 175 and 180 of the drive shaft 105.

Knowing the torsional elastic characteristic of the torsion bar 185, the angular offset can then allow the electronic control and command unit 215 to determine the torsional torque applied to the second segment 180, e.g., by the driver through the manual member 195 (e.g., steering wheel).

Based on this torque information, and possibly based on other information provided by other sensors, the electronic control and command unit 215 can be configured to control the operation of the electric motor 200, preferably the direction and modulus (intensity) of the torsional torque that it generates and applies to the drive shaft 105

For example, the electronic control and command unit 215 can be configured to establish, based on the torque information provided by the joint action of the first and the second angular position sensor 220 and 265, the direction and modulus of the torsional torque to be generated by the electric motor 200 and applied to the drive shaft 105.

Based on the direction and torque value thus established, the electronic control and command unit 215 can then be configured to supply the electric motor with an electric current such that a torsional torque having the desired direction and modulus is obtained therefrom.

In this regard, it should be noted that, as required, the electric motor 200 can be commanded to generate a torque on the drive shaft 105 that is oriented in the same direction as that imparted by the driver, i.e., in the same direction of rotation in which the driver wishes to rotate the drive shaft 105, or in a direction opposite that imparted by the driver, i.e., in a direction of rotation opposite that in which the driver wishes to rotate the drive shaft 105.

Alternatively or in addition to the foregoing, the second angular position sensor 265 can be used by the electronic control and command unit 215 to know instant by instant the actual position of the manual member 195 (e.g., of the steering wheel), for example to perform procedures that automatically return it to a predetermined position (*autocentering*)*.*

Alternatively or in addition to this, the second angular position sensor 265 can have a redundancy function.

For example, the electronic control and command unit 215 can be configured to use the measurements made by the second angular position sensor 265 to calibrate and/or set the first angular position sensor 220 when/if required.

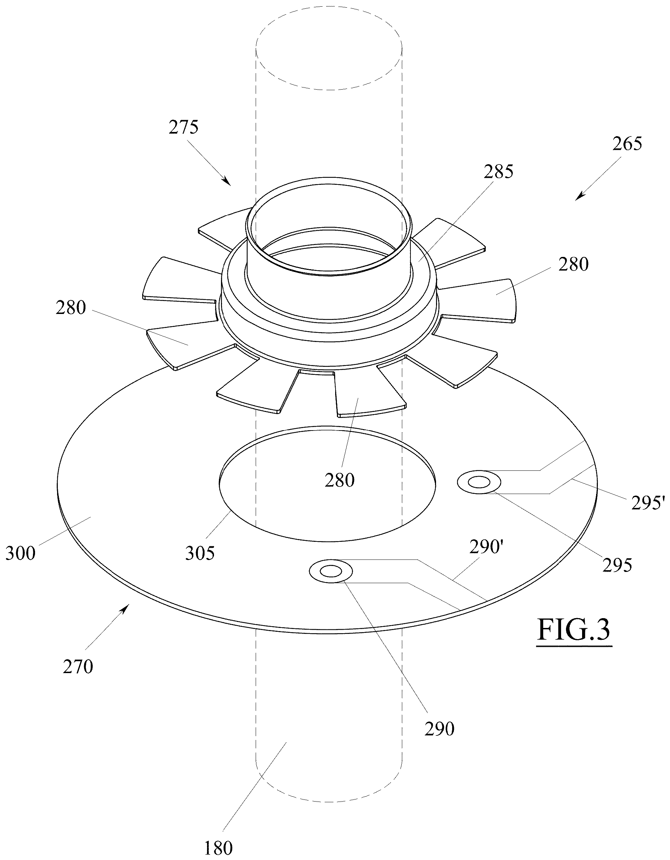

Similarly to the first angular position sensor 220, the second angular position sensor 265 can comprise a stator part 270 and a rotor part 275 (see Fig. 3), both of which can be contained within the casing that can define the support structure 190.

The stator part 270 can be fixed to the support structure 190 while the rotor part 275 can be coupled to the second segment 180 of the drive shaft 105, so as to be integral therewith at least in rotation.

In particular, the rotor part 275 can comprise a plurality of lobes 280, but possibly also only one, which protrude radially with respect to the second segment 180 of the drive shaft 105, so as to be lateral with respect to its rotation axis.

These lobes 280 can be made as a single body or otherwise fixed to an annular body 285, preferably made of metallic material, which is fitted and rotatably constrained (e.g., keyed) to the second segment 180 of the drive shaft 105.

The lobes 280, which can also be made of metallic material, are preferably identical to each other.

They can be radially distributed around the second segment 180 of the drive shaft 105, e.g., substantially coplanar in a plane orthogonal to the rotation axis and angularly equidistant.

In particular, each of these lobes 280 can be shaped as a relatively thin flap having the shape of a circular sector (or more appropriately a disc sector) centred on the rotation axis of the second segment 180 of the drive shaft 105 and lying in a plane perpendicular thereto.

If only one lobe 280 is present, the flap defining it can have an angular extension substantially equal to 180°.

If there are several lobes 280, the flaps defining them can all have the same angular extension, which can be equal to the angular extension of each of the gaps separating them.

In order for the second angular position sensor 265 to also possess a high resolution, it is however preferable that the number of lobes 280 be greater than one.

In particular, to simplify and improve the detection of offsets, it can be suitable for the number of lobes 280 of the second angular position sensor 265 to be at least equal to, but more preferably higher than, the number of lobes 235 of the first angular position sensor 220.

Ideally, the number of lobes 280 of the second angular position sensor 265 should be a multiple of the number of lobes 235 of the first angular position sensor 265.

The stator part 270 of the second angular position sensor 265 can comprise at least one sensitive element 290, which is sensitive to the angular position of the lobes 235, i.e., is sensitive to (e.g., manifests a different behaviour or property based on) the angular position that the lobes 280 assume with respect to the sensitive element 290 itself.

The stator part 270 of the second angular position sensor 265 can further comprise an electrical/electronic circuit 290' which, for example by exploiting the aforesaid sensitivity, is adapted to detect the angular position of the lobes 280 with respect to said sensitive element 290.

In particular, the electrical/electronic circuit 290' can be configured to generate and transmit to the electronic control and command unit 215 an electrical signal, at least one characteristic parameter of which (e.g., the voltage level) is influenced by the angular position of the lobes 280 with respect to said sensitive element 290, thereby being representative of the angular position of the second segment 180 of the drive shaft 105.

For example, the sensitive element 290, which is depicted schematically as a small circle in the figures, can in fact comprise at least three concentric windings of conducting material, two of which have a sinusoidal trend, entirely analogous to those outlined above with reference to the first angular position sensor 220.

Thereby, the second angular position sensor 265 is also an inductive type sensor that can be based on the same operating principle.

In other embodiments, the second angular position sensor 265 could, however, be capacitive, magnetic or any other type.

Irrespective of the technology used, in order to increase the reliability of the second angular position sensor 265, the stator part 270 can also comprise a second sensitive element 295, distinct from the previous one but analogous and adapted to interact with the same lobes 280 of the rotor part 275, and possibly a respective second electrical/electronic circuit 295', so as to generate and transmit to the electronic control and command unit 215 a second analogous electrical signal representative of the angular position of the second segment 180 of the drive shaft 105.

This second electrical signal is substantially redundant with respect to the first and can be useful to ensure that the steering apparatus 100 continues to operate safely, even in the event of a failure of the first sensitive element 290.

It is not excluded, however, that the second angular position sensor 265 can comprise only one sensitive element, e.g., the sensitive element 290, or a number of sensitive elements greater than two.

Each sensitive element 290 and/or 295, and possibly the corresponding electrical/electronic circuit, can be associated with or integrated into an electronic board 300 (e.g., PCB).

This electronic board 300, which can be generally flat in shape, can be oriented perpendicular to the rotation axis of the second segment 180 of the drive shaft 105 and can be provided with a through hole 305 into which the second segment 180 can freely fit.

The electronic board 300 can be fixed, e.g., screwed, to the support structure 190 of the drive shaft 105, e.g., by staying inside the housing that defines it.

In particular, the electronic board 300 can be positioned so that one of its major surfaces faces the lobes 280 of the rotor part 275.

For this purpose, the maximum diameter of the lobes 280 is preferably larger than the diameter of the through hole 305 and the maximum diameter of the electronic board 300 smaller.

Furthermore, it is preferable that the electronic board 300 is positioned a short distance from the lobes 280 of the rotor part 275 (generally much shorter than illustrated in Figure 3) and, regardless of this, that it is separated from said lobes 280 by an empty gap, i.e., so that there is nothing in between.

Each of the sensitive elements 290 and/or 295 can be applied (e.g., printed, etched, cut or mounted) to the surface of the electronic board 300 which the lobes 280 face.

For example, if each of the sensitive elements 290 and/or 295 comprises the aforementioned windings, each of them could be made in the form of a track (or line) of conductive material etched on the surface of the electronic board 300.

In the embodiment illustrated in Figure 1, the first angular position sensor 220 and the second angular position sensor 265 are positioned on opposite sides of the electric motor 200.

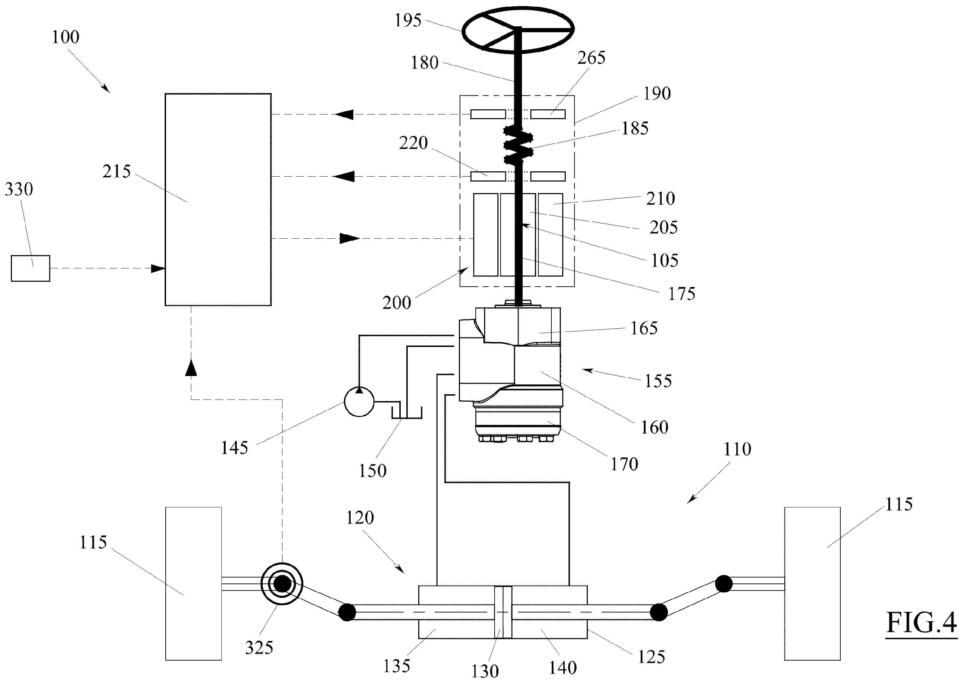

In the embodiment illustrated in Figure 4, the first angular position sensor 220 and the second angular position sensor 265 are instead positioned on the same side of the electric motor 200, in this case so that the latter is interposed between the pair of angular position sensors 220 and 265 and the device 110, for example the hydrostatic steering unit.

In this case, the first angular position sensor 220 and the second angular position sensor 265 can also be positioned very close to each other, for example exploiting the fact that the first segment 175 and the second segment 180 of the drive shaft 105 can be substantially contiguous or even partially inserted into each other, and the torsion bar 185 accommodated therein.

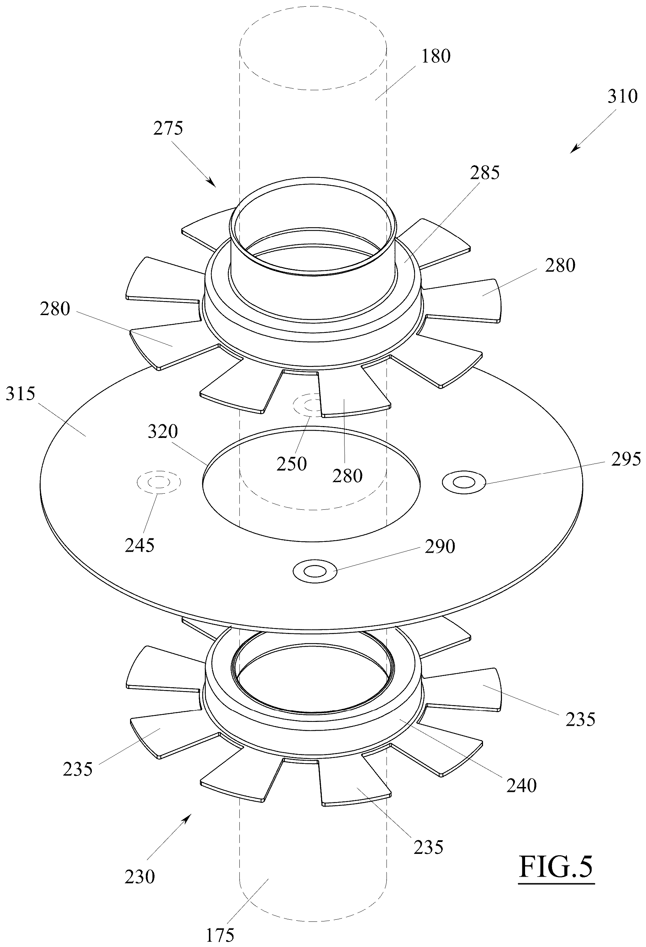

In this or other cases, a possible embodiment could envisage that the first angular position sensor 220 and the second angular position sensor 265 could be comprised in a single integrated sensor 310 (see Fig. 5), for example to reduce footprints.

This integrated sensor 310 can comprise the rotor part 230 of the first angular position sensor 220 and the rotor part 275 of the second angular position sensor 265, which are adapted to be rotatably constrained to the first segment 175 and the second segment 180 of the drive shaft 105, respectively.

The two rotor parts 230 and 275 are not described further herein, as their description corresponds exactly to that given for the individual sensors, to which reference is made for details.

The integrated sensor 310 can further comprise an electronic board 315 (e.g., PCB), preferably a single electronic board 315.

This electronic board 315, which can be generally flat in shape, can be oriented perpendicular to the rotation axis of the drive shaft 105 and can be provided with a through hole 320 into which the drive shaft 105 can freely slide.

The electronic board 315 can be fixed, e.g., screwed, to the support structure 190 of the drive shaft 105, e.g., by staying inside the housing that defines it.

In particular, the electronic board 315 can be positioned so that it is axially interposed between the two rotor parts 230 and 275.

Thereby, it has one of its major surfaces facing the lobes 235 of the rotor part 230, and the other opposite major surface facing the lobes 280 of the rotor part 275.

In this respect, the maximum diameter of the lobes 235 and 280 is preferably larger than the diameter of the through hole 320 and the maximum diameter of the electronic board 315 smaller.

It is also preferable that the electronic board 315 is positioned a short distance from both the lobes 235 of the rotor part 230 and the lobes 280 of the rotor part 275 (generally much shorter than depicted in Figure 5) and, regardless of this, is separated from them by two empty gaps, i.e., so that there is nothing in between.

The integrated sensor 310 further comprises at least one sensitive element, for example the sensitive element 245 and/or the sensitive element 250, adapted to interact with the lobes 235 of the rotor part 230, as well as at least one sensitive element, for example the sensitive element 290 and/or the sensitive element 295, adapted to interact with the lobes 280 of the rotor part 275.

The sensitive elements 245, 250, 290 and 295 are not described further, as their description corresponds exactly to that given for the individual sensors, to which reference is made for details.

In particular, each sensitive element 245, 250, 290 and 295, and possibly the relative electrical/electronic circuit, can however be associated or integrated in the same electronic board 315.

For example, each of the sensitive elements 245 and/or 250 can be applied (e.g., printed, etched, cut or mounted) to the surface of the electronic board 315 faced by the lobes 235, while each of the sensitive elements 290 and/or 295 can be applied (e.g., printed, etched, cut or mounted) to the opposite surface of the electronic board 315 faced by the lobes 280.

For example, if each of the sensitive elements 245 and/or 250 and/or 290 and/or 295 comprises the aforementioned windings, each of them could be made in the form of a track (or line) of conductive material etched on the corresponding surface of the electronic board 315.

In addition to the foregoing, the sensors of the steering apparatus 100 can also comprise a steering sensor 325, which is configured to (directly) measure an indicative value of a steering angle of the vehicle, in particular with respect to a reference position, for example in which the vehicle on which the steering apparatus 100 is mounted is moving along a substantially straight trajectory.

It should be noted that steering angle is intended as an angle of rotation of the steering wheels with respect to a substantially vertical axis, i.e., with respect to the steering axis. The steering sensor 325, which can be a rotary hall-effect or potentiometric sensor, can be placed at a swivel precisely adapted to define the steering axis of one of the steering wheels with respect to a chassis of the vehicle.

Alternatively, the steering sensor 325 can be an optical or inductive sensor configured to measure the relative position of the plunger 130 with respect to the cylinder 125.

The sensors of the steering apparatus 100 can also comprise a speed sensor 330 configured to measure an indicative value of a movement speed (forward or backward) of the vehicle.

The sensors of the steering apparatus 100 can instead not comprise any other sensors of the angular position of the drive shaft 105, other than those described above, i.e., the two angular position sensors 220 and 265 described above (either separate or integrated in a single device) can be the only sensors of the steering apparatus 100 capable of measuring the angular position of the drive shaft 105, or segments/portions thereof, with respect to the support structure 190.

Finally, the steering apparatus 100 can comprise an electronic memory (not illustrated) operatively connected to the electronic control and command unit 215, in which a computer code for managing the electric motor 200 can be stored.

Obviously a person skilled in the art will be able to make numerous technical-applicative modifications to all the above, without thereby departing from the scope of the invention as hereinbelow claimed.

## Claims

1. A steering apparatus (100) provided with:
- a drive shaft (105) rotatably coupled to a support structure (190) and comprising at least a first segment (175), a second segment (180), and a torsion bar (185) which is placed to connect the first segment (175) to the second segment (180) allowing them relative angular offsets,
- a device (110) adapted to transform a rotation of the drive shaft (105) into a displacement of at least one steering member (115) of a vehicle, said device (110) comprising at least one hydraulic steering actuator (120) and a hydrostatic steering unit (155) comprising a rotary distributor (165) and a rotary dosing device (170),
- an electric motor (200) adapted to apply torsional torques to the drive shaft (105),
- two angular position sensors, of which a first angular position sensor (220) adapted to detect the angular position of the first segment (175) of the drive shaft (105) with respect to the support structure (190), and a second angular position sensor (265) adapted to detect the angular position of the second segment (180) of the drive shaft (105) with respect to the support structure (190), and
- an electronic control and command unit (215) configured to use the detections made by said first and second angular position sensor (220, 265), so as to determine an angular offset between the first segment (175) and the second segment (180) of the drive shaft (105), to use said angular offset so as to calculate a torsional torque applied to the drive shaft (105), and to control the operation of the electric motor (200) based on the calculated torsional torque.

2. A steering apparatus (100) according to claim 1, wherein the first angular position sensor (220) and the second angular position sensor (265) are both inductive type sensors.

3. A steering apparatus (100) according to claim 1 or 2, wherein the first angular position sensor (220) is individually configured to generate two independent signals, which are both indicative of the angular position of the first segment (175) of the drive shaft (105) with respect to the support structure (190).

4. A steering apparatus (100) according to any one of the preceding claims, wherein the first angular position sensor (220) comprises:
- a rotor part (230) coupled to the first segment (175) of the drive shaft (105) so as to be integral therewith at least in rotation, and
- a stator part (225) fixed to the support structure (190),
wherein the rotor part (230) comprises one or more lobes (235) protruding radially with respect to the first segment (175) of the drive shaft (105), and wherein the stator part (225) comprises at least one element sensitive (245) to the angular position of said lobes (235).

5. A steering apparatus (100) according to claim 4, wherein the number of the lobes (235) of the rotor part (230) of the first angular position sensor (220) is equal to or less than a total number of pole pairs of the electric motor (200).

6. A steering apparatus (100) according to claim 4 or 5, wherein the first angular position sensor (220) comprises a second element (250) sensitive to the angular position of said lobes (235).

7. A steering apparatus (100) according to any one of claims from 4 to 6, wherein the stator part (225) of the first angular position sensor comprises an electronic board (255, 315), and wherein each sensitive element (245, 250) of the first angular position sensor (220) is associated with said electronic board (255, 315).

8. A steering apparatus (100) according to any one of the preceding claims, wherein the second angular position sensor (265) is individually configured to generate two independent signals, which are both indicative of the angular position of the second segment (180) of the drive shaft (105) with respect to the support structure (190).

9. A steering apparatus (100) according to any one of the preceding claims, wherein the second angular position sensor (265) comprises:
- a rotor part (275) coupled to the second segment (180) of the drive shaft (105) so as to be integral therewith at least in rotation, and
- a stator part (270) fixed to the support structure (190),
wherein the rotor part (275) comprises one or more lobes (280) protruding radially with respect to the second segment (180) of the drive shaft (105), and wherein the stator part (270) comprises at least one element sensitive (290) to the angular position of said lobes (280).

10. A steering apparatus (100) according to claims 4 and 9, wherein the number of the lobes (280) of the rotor portion (275) of the second angular position sensor (265) is equal to or greater than the number of the lobes (235) of the rotor portion (230) of the first angular position sensor (220).

11. A steering apparatus (100) according to claim 9 or 10, the second angular position sensor may comprise a second element (295) sensitive to the angular position of said lobes (280).

12. A steering apparatus (100) according to any one of claims 9 to 11, wherein the stator part (270) of the second angular position sensor (265) comprises an electronic board (300, 315) and that each sensitive element (290, 295) of the second angular position sensor (265) is associated with said electronic board (300, 315).

13. A steering apparatus (100) according to claims 7 and 12, wherein each sensitive element (290, 295) of the second angular position sensor (265) is associated with the same electronic board (315) to which each sensitive element (245, 250) of the first position sensor (220) is associated.

14. A method for controlling a steering apparatus (100),
wherein the steering apparatus (100) comprises:
- a drive shaft (105) rotatably coupled to a support structure (190) and comprising at least a first segment (175), a second segment (180), and a torsion bar (185) which is placed to connect the first segment (175) to the second segment (180) allowing them relative angular offsets,
- a device (110) adapted to transform a rotation of the drive shaft (105) into a displacement of at least one steering member (115) of a vehicle, said device (110) comprising at least one hydraulic steering actuator (120) and a hydrostatic steering unit (155) comprising a rotary distributor (165) and a rotary dosing device (170),
- an electric motor (200) adapted to apply torsional torques to the drive shaft (105), and
- two angular position sensors, of which a first angular position sensor (220) adapted to detect the angular position of the first segment (175) of the drive shaft (105) with respect to the support structure (190), and a second angular position sensor (265) adapted to detect the angular position of the second segment (180) of the drive shaft (105) with respect to the support structure (190),
wherein the method further comprises the steps of:
- detecting, by means of the first angular position sensor (220), the angular position of the first segment (175) of the drive shaft (105) with respect to the support structure (190),
- detecting, by means of the second angular position sensor (265), the angular position of the second segment (180) of the drive shaft (105) with respect to the support structure (190),
- calculating the angular offset between the first segment (175) and the second segment (180) based on the detections of the two angular position sensors,
- determining, based on the calculated angular offset, a torsional torque applied to the drive shaft (105), and
- controlling the operation of the electric motor (200) based on the calculated torsional torque.
